(19) Europäisches Patentamt
European Patent Office
Office européen des brevets

(11) **EP 4 282 526 A1**

(12) **EUROPÄISCHE PATENTANMELDUNG**

(43) Veröffentlichungstag:
**29.11.2023   Patentblatt 2023/48**

(21) Anmeldenummer: **22175272.8**

(22) Anmeldetag: **25.05.2022**

(51) Internationale Patentklassifikation (IPC):
**B01J 23/42** (2006.01)      **B01J 23/44** (2006.01)
**B01J 23/46** (2006.01)      **B01J 23/63** (2006.01)
**B01J 35/06** (2006.01)      **C01B 21/00** (2006.01)

(52) Gemeinsame Patentklassifikation (CPC):
**B01J 23/63; B01J 23/42; B01J 23/44;**
**B01J 23/464; B01J 35/06; C01B 21/265**

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Heraeus Deutschland GmbH & Co. KG**
**63450 Hanau (DE)**

(72) Erfinder:
• **WALD, Verena**
  **63450 Hanau (DE)**
• **JANTSCH, Uwe**
  **63450 Hanau (DE)**
• **MAIER, Dirk**
  **63450 Hanau (DE)**

(74) Vertreter: **Heraeus IP**
**Heraeus Business Solutions GmbH**
**Intellectual Property**
**Heraeusstraße 12-14**
**63450 Hanau (DE)**

(54) **KATALYSATORNETZ MIT EINEM EDELMETALLDRAHT AUS EINER DISPERSIONSVERFESTIGTEN EDELMETALLLEGIERUNG**

(57)     Die vorliegende Erfindung betrifft ein Katalysatornetz, umfassend mindestens einen Edelmetalldraht, der mindestens eine dispersionsverfestigte Edelmetalllegierung enthält. Die Erfindung betrifft außerdem ein Katalysatorsystem enthaltend mindestens ein erfindungsgemäßes Katalysatornetz, sowie ein Verfahren zur katalytischen Oxidation von Ammoniak, bei dem ein erfindungsgemäßes Katalysatornetz verwendet wird.

Abbildung 1

**Beschreibung**

Die vorliegende Erfindung betrifft ein Katalysatornetz, umfassend mindestens einen Edelmetalldraht, der mindestens eine dispersionsverfestigte Edelmetalllegierung enthält. Die Erfindung betrifft außerdem ein Katalysatorsystem enthaltend mindestens ein erfindungsgemäßes Katalysatornetz, sowie ein Verfahren zur katalytischen Oxidation von Ammoniak, bei dem ein erfindungsgemäßes Katalysatornetz verwendet wird.

Katalysatornetze werden insbesondere in Strömungsreaktoren für Gasreaktionen verwendet. Sie werden beispielsweise bei der Herstellung von Blausäure nach dem Andrussow-Verfahren oder bei der Herstellung von Salpetersäure nach dem Ostwald-Verfahren eingesetzt. Geeignete Katalysatoren müssen eine große katalytisch aktive Oberfläche bereitstellen. In der Regel werden daher Katalysatornetze in Form von räumlichen, gasdurchlässigen Strukturen aus Edelmetalldrähten verwendet. Auch Auffangsysteme zur Rückgewinnung von verdampften katalytisch aktiven Bestandteilen basieren häufig auf solchen netzförmigen Strukturen. Es werden zweckmäßigerweise meist mehrere Netze hintereinander angeordnet und zu einem Katalysatorsystem zusammengefasst. Die Katalysatorsysteme bestehen aus 3 bis 50 übereinanderliegenden Katalysatornetzen, wobei diese Anzahl im Wesentlichen von den Bedingungen im Reaktor, beispielsweise dem Betriebsdruck und der Massen-Durchflussmenge der Gase abhängt. Der Durchmesser der Netze erreicht in bestimmten Brennern 6 m.

Die Katalysatornetze bestehen meist aus ein- oder mehrlagigen Netzen in Form von Gestricken, Gewirken und/oder Geweben. Die einzelnen Netze werden aus feinen Edelmetalldrähten hergestellt, die überwiegend Platin (Pt), Palladium (Pd), Rhodium (Rh) oder Legierungen dieser Metalle enthalten. Die Wahl des Materials des Edelmetalldrahtes wird unter anderem durch die Position und Funktion des Katalysatornetzes im Katalysatorsystem bestimmt. Vor allem Auffang-Netze können neben Edelmetallen auch weitere Bestandteile wie beispielsweise Nickel enthalten. Um die katalytisch-aktive verfügbare Oberfläche zu erhöhen, weisen die Katalysatornetze häufig neben der planaren Ausdehnung eine dreidimensionale Struktur auf.

Die Katalysatornetze werden bei hohen Temperaturen (> 800 °C) in den Reaktoren verwendet. Aufgrund der Druckdifferenz und der hohen Temperaturen im Reaktor werden die Netzstrukturen komprimiert, wodurch sowohl die freie, also für die Reaktanden zugängliche, Oberfläche verringert wird, als auch die Strömungsverhältnisse verschlechtert werden. Diese Effekte bewirken eine mit steigender Einsatzdauer sinkende Effizienz. Aufgrund der hohen Edelmetallpreise ist es wirtschaftlich uninteressant, die Katalysatornetze aus dickeren und damit stärkeren Edelmetalldrähten herzustellen. Außerdem ist dies technisch unattraktiv, da der Druckabfall mit zunehmendem Drahtdurchmesser steigt, was sich nachteilig auf die Gesamteffizienz des Prozesses auswirken würde. Es ist daher wünschenswert, die mechanische Stabilität der Katalysatornetze sowie die Menge des verwendeten Edelmetalls für eine bestimmte katalytische Aktivität zu optimieren. Ein weiteres Problem, das bei der Ammoniakoxidation auftreten kann, ist die Verschmelzung und/oder Versinterung mehrerer hintereinander angeordneter Katalysatornetze.

Eine Verbesserung der mechanischen Stabilität von Katalysatornetzen wird im Stand der Technik meist durch die Form der eingesetzten Edelmetalldrähte vorgesehen. Die EP 0652985 A1 offenbart beispielsweise einen Draht aus Platinzusammensetzungen, der mindestens einen helixförmigen Teilabschnitt umfasst. In der EP 3523024 A1 wird zur Erhöhung der mechanischen Festigkeit der Katalysatornetze vorgeschlagen, für deren Herstellung einen Draht aus mehreren miteinander verdrillten Filamenten zu verwenden.

Die EP 3256244 A1 schlägt zur Erhöhung der Festigkeit von Katalysatornetzen die Verwendung einer dreidimensionalen Struktur vor, bei der mehrere Katalysatornetzlagen über so genannte Polfäden miteinander verbunden werden.

Die im Stand der Technik offenbarten Lösungen erfordern also eine aufwendigere Herstellung der Edelmetalldrähte oder der Katalysatornetze.

Metallische Werkstoffe besitzen häufig eine höhere Warmfestigkeit, wenn sie in gleichmäßiger Verteilung eine geringe Menge darin nicht löslicher Partikel aus Unedelmetalloxiden enthalten. Derartige Werkstoffe werden als dispersionsverfestigt oder dispersionsgehärtet bezeichnet. Die Herstellung kann nach unterschiedlichen Verfahren erfolgen (siehe insbesondere zur Herstellung von platinbasierten Werkstoffen: E. Drost, H. Gölitzer, M. Poniatowski, S. Zeuner: Platin-Werkstoffe für Hochtemperatur-Einsatz, Metall 50 (1996), 492 - 498). Dispersionsverfestigte Platin-Werkstoffe zeichnen sich beispielsweise durch ihre Widerstandsfähigkeit gegen Korrosion und Oxidation bei hoher Temperatur aus und werden u. a. wegen ihrer Beständigkeit gegenüber Glasschmelzen in der Glasindustrie eingesetzt. Die Herstellung und Bearbeitung dieser Materialien ist beispielsweise in den Druckschriften GB 1340076 A, EP 0683240 A2, EP 1188844 A1, EP 1964938 A1 und EP 3077556 A1 beschrieben. Die Verwendung für Katalysatornetze ist jedoch nicht bekannt.

Die Aufgabe der Erfindung besteht darin, einige der Nachteile des Stands der Technik zu überwinden. Aufgabe war es, ein Katalysatornetz bereitzustellen, das eine hohe und zeitlich stabile Produktausbeute gewährleistet und dabei eine hohe Lebensdauer aufweist. Insbesondere war es Aufgabe der vorliegenden Erfindung ein Katalysatornetz bereitzustellen, das unter den Einsatzbedingungen in einem Strömungsreaktor eine verringerte Kompression aufweist, um eine erhöhte Langzeitstabilität zu gewährleisten.

Die Aufgabe wird gelöst durch ein Katalysatornetz umfassend mindestens einen Edelmetalldraht, dadurch gekennzeichnet, dass der mindestens eine Edelmetalldraht mindestens eine dispersionsverfestigte Edelmetalllegierung enthält, die neben mindestens einem Edelmetall mindestens ein Nicht-Edelmetall umfasst, wobei das mindestens eine Nicht-Edelmetall ausgewählt ist aus der Gruppe bestehend aus Zirkonium, Cer, Scandium und Yttrium und das mindestens eine Nicht-Edelmetall zumindest teilweise als Oxid vorliegt.

Die Erfindung stellt weiterhin ein Katalysatorsystem und ein Verfahren für den Einsatz eines solchen Katalysatornetzes bereit.

Überraschend hat sich gezeigt, dass durch den Einsatz von dispersionsverfestigten Edelmetalllegierung für mindestens einen Edelmetalldraht des Katalysatornetzes die Lebensdauer der Netze bei gleichbleibender katalytischer Effizienz deutlich erhöht werden kann. Ohne an eine Theorie gebunden sein zu wollen, führt die Verwendung eines dispersionsverfestigten Edelmetalldrahtes bei der Herstellung der Netze mutmaßlich zu einer höheren mechanischen Festigkeit bei den hohen Einsatztemperaturen, was zu einer verminderten Kompression über die Laufzeit führen kann.

Die vorliegende Erfindung betrifft ein Katalysatornetz. Unter einem Katalysatornetz wird ein ein- oder mehrlagiges gasdurchlässiges Flächengebilde verstanden. Die Flächenbildung der Katalysatornetze wird durch maschenförmiges Verschlingen eines oder mehrerer Edelmetalldrähte erreicht. Katalysatornetze können beispielswiese durch Weben, Wirken oder Stricken eines Edelmetalldrahts oder mehrerer Edelmetalldrähte hergestellt werden. Die Struktur der Katalysatornetze kann dabei gezielt durch die Verwendung unterschiedlicher Web-, Wirk- oder Strickmuster und/oder unterschiedliche Maschenweiten eingestellt werden. Katalysatornetze werden typischerweise in Strömungsreaktoren eingesetzt. Dabei werden die Katalysatornetze in einer Ebene senkrecht zur Strömungsrichtung des Frischgases in die Reaktionszone eingebaut.

In bevorzugten Ausführungsformen kann das Katalysatornetz eine dreidimensionale Struktur aufweisen. Im Rahmen dieser Anmeldung werden Netze als flache, zweidimensionale Gegenstände verstanden. Unter einer dreidimensionalen Struktur ist zu verstehen, dass das Katalysatornetz neben seiner planaren, zweidimensionalen Ausdehnung auch eine Erstreckung in die dritte Raumdimension aufweist. Katalysatornetze mit dreidimensionaler Struktur weisen eine größere freie Oberfläche und verbesserte Stofftransportbedingungen zwischen Gas und Oberfläche auf, was sich vorteilhaft auf die katalytische Effektivität auswirken und den Druckabfall im Strömungsreaktor verringern kann. Eine dreidimensionale Struktur kann durch die Verwendung mindestens eines Edelmetalldrahtes mit zwei- oder dreidimensionaler Struktur oder durch die Strukturierung des Katalysatornetzes erhalten werden. Dreidimensionale Strukturen des Katalysatornetzes können beispielsweise wellenförmig oder beulenförmig sein. Zur Erzeugung solcher Strukturen kann ein zunächst planares Katalysatornetz einem Verfahrensschritt unterzogen werden, bei dem eine dreidimensionale Struktur eingeprägt wird oder durch Faltung erzeugt wird.

Das Katalysatornetz enthält mindestens einen Edelmetalldraht. Unter einem Edelmetalldraht wird ein Draht verstanden, der aus Edelmetall oder einer Edelmetalllegierung besteht. Unter einer Edelmetalllegierung wird eine Legierung verstanden, die mehr als 50 Gew.-% Edelmetall enthält. Dass eine Legierung zu mehr als 50 Gew.-% aus Edelmetall besteht, bedeutet, dass der Gewichtsanteil des Edelmetalls mindestens 50 Gew.-% des Gewichts der gesamten Legierung ausmacht.

Das Edelmetall ist vorzugsweise aus der Gruppe ausgewählt, die aus Platinmetallen, Gold und Silber besteht. Unter Platinmetallen sind die Metalle der sogenannten Platingruppe, also Platin (Pt), Palladium (Pd), Iridium (Ir), Rhodium (Rh), Osmium (Os) und Ruthenium (Ru), zu verstehen.

Der mindestens eine Edelmetalldraht umfasst mindestens eine dispersionsverfestigte Edelmetalllegierung.

Die dispersionsverfestigte Edelmetalllegierung kann ein einzelnes Edelmetall oder eine Kombination von Edelmetallen enthalten. Bevorzugt besteht die dispersionsverfestigte Edelmetalllegierung zu mindestens 50 Gew.-% aus dem mindestens einen Edelmetall, bezogen auf das Gesamtgewicht der dispersionsverfestigten Edelmetalllegierung, besonders bevorzugt zu mindestens 70 Gew.-%, insbesondere zu mindestens 90 Gew.-%, am bevorzugtesten zu mindestens 99 Gew.-%.

Bevorzugt ist das mindestens eine Edelmetall der dispersionsverfestigten Edelmetalllegierung ausgewählt aus der Gruppe bestehend aus Platin, Palladium, Rhodium und deren Mischungen.

Insbesondere bevorzugt ist das mindestens eine Edelmetall der dispersionsverfestigte Edelmetalllegierung Platin, in diesem Fall ist die dispersionsverfestigte Edelmetalllegierung eine dispersionsverfestigte Platinlegierung. Besonders vorteilhaft besteht die dispersionsverfestigte Platinlegierung zu mindestens 50 Gew.-% aus Platin, bevorzugt zu mindestens 70 Gew.-%, besonders bevorzugt zu mindestens 80 Gew.-%.

Weiterhin kann die dispersionsverfestigte Platinlegierung auch mindestens ein weiteres Edelmetall umfassen. Eine solche dispersionsverfestigte Platinlegierung umfasst bevorzugt mindestens 70 Gew.-% Platin und maximal 29,95 Gew.-% des mindestens einen weiteren Edelmetalls, insbesondere mindestens 80 Gew.-% Platin und maximal 19,95 Gew.-% des mindestens einen weiteren Edelmetalls. Das mindestens eine weitere Edelmetall ist bevorzugt ausgewählt aus der Gruppe bestehend aus Ruthenium, Rhodium, Gold, Palladium, Iridium und deren Mischungen. Bevorzugt ist die dispersionsverfestigte Platinlegierung eine Platin-Rhodium-Legierung, eine Platin-Gold-Legierung, eine Platin-Palladium-Legierung, eine Platin-Palladium-Rhodium-Legierung oder eine Platin-Iridium-Legierung.

Die dispersionsverfestigte Edelmetalllegierung umfasst mindestens ein Nicht-Edelmetall, das ausgewählt ist aus der Gruppe bestehend aus Zirkonium, Cer, Scandium und Yttrium.

Bevorzugt sind 0,005 Gew.-% bis 1,0 Gew.-%, besonders bevorzugt 0,1 Gew.-% bis 0,8 Gew.-% und speziell bevorzugt 0,2 Gew.-% bis 0,5 Gew.-% des mindestens einen Nicht-Edelmetalls in der dispersionsgehärteten Edelmetalllegierung enthalten, bezogen auf das Gesamtgewicht der dispersionsgehärteten Edelmetalllegierung.

Das mindestens eine Nicht-Edelmetall liegt zumindest teilweise als Oxid vor. Es kann vorgesehen sein, dass das mindestens eine Nicht-Edelmetall zumindest zu 70 % oxidiert vorliegt, bevorzugt zu mindestens 90 %, besonders bevorzugt zu 99 % und insbesondere bevorzugt vollständig oxidiert. Hierbei werden alle Oxidationsstufen des mindestens einen Nicht-Edelmetalls berücksichtigt, sodass vorzugsweise höchstens 30 %, besonders bevorzugt höchstens 10 %, insbesondere höchstens 1 % des mindestens einen Nicht-Edelmetalls als Metall, das heißt in der formalen Oxidationsstufe 0 vorliegen. Der Anteil des mindestens einen Nicht-Edelmetalls, der als Oxid vorliegt, gibt das Verhältnis zwischen der Menge des mindestens einen Nicht-Edelmetalls in höheren Oxidationsstufen als 0 zur Gesamtmenge des mindestens einen Nicht-Edelmetalls an. Der Anteil des mindestens einen Nicht-Edelmetalls, das als Oxid vorliegt, kann durch Trägergasheißextraktion ermittelt werden. Dafür wird der Sauerstoffgehalt indirekt gemessen, indem der Sauerstoff aus einer Probe mit Kohlenstoff umgesetzt wird und der Gehalt an entstehendem $CO_2$ mittels IR-Spektroskopie quantifiziert wird. Dieser Bestimmung liegt die Annahme zugrunde, dass der gesamte Sauerstoffgehalt der Probe auf oxidisches Nicht-Edelmetall zurück geht. Bei Mischungen mehrerer Nicht-Edelmetalle wird davon ausgegangen, dass der Anteil an oxidiertem bzw. nicht-oxidiertem Nicht-Edelmetall für die unterschiedlichen Nicht-Edelmetalle gleich ist.

Das Oxid des mindestens einen Nicht-Edelmetalls liegt bevorzugt in Form von gleichmäßig in der Edelmetallmatrix dispergierten Partikeln vor, bevorzugt weisen die Partikel eine Größe im Bereich von 1 nm - 1 $\mu$m auf, insbesondere im Bereich von 50 nm - 500 nm. Bevorzugterweise sind die Partikel kleiner als 1 $\mu$m, insbesondere kleiner als 500 nm, besonders bevorzugt kleiner als 100 nm.

Das mindestens eine Nicht-Edelmetall kann auch eine Mischung mehrerer Nicht-Edelmetalle umfassen. Bevorzugte Mischungen von Nicht-Edelmetallen umfassen Yttrium und Zirkon, Yttrium und Cer, Yttrium und Scandium, Zirkon und Cer, Zirkon und Scandium, Cer und Scandium, Yttrium und Zirkon und Cer oder Yttrium und Zirkon und Scandium.

Bevorzugt liegt der Anteil an Zirkon bei Mischungen mehrerer Nicht-Edelmetalle im Bereich von 70 - 98 mol-%, mehr bevorzugt im Bereich von 80 - 95 mol-%, besonders bevorzugt im Bereich von 85 - 93 mol-% und ganz besonders bevorzugt im Bereich von 90 - 92 mol-%.

Der Anteil an Yttrium bei Mischungen mehrerer Nicht-Edelmetalle liegt bevorzugt im Bereich von 2-30 mol-%, mehr bevorzugt im Bereich von 3,5 - 20 mol-%, besonders bevorzugt im Bereich von 5 - 15 mol-%, und ganz besonders bevorzugt im Bereich von 6-10 mol-%.

Der Anteil an Cer bei Mischungen mehrerer Nicht-Edelmetalle liegt bevorzugt im Bereich von 2-30 mol-%, mehr bevorzugt im Bereich von 3,5 - 20 mol-%, besonders bevorzugt im Bereich von 5 - 15 mol-%, und ganz besonders bevorzugt im Bereich von 6-10 mol-%.

Bevorzugte Mischungen mehrerer Nicht-Edelmetalle bestehen

(a) aus 2 - 30 mol-%, vorzugsweise 7-15 mol-% Yttrium und 70 - 98 mol-%, vorzugsweise 85 - 93 mol-% Zirkon,
(b) aus 2 - 30 mol-%, vorzugsweise 7-15 mol-% Yttrium und 70 - 98 mol-%, vorzugsweise 85 - 93 mol-% Cer,
(c) aus 2-30 mol-%, vorzugsweise 7-15 mol-% Cer und 70 - 98 mol-%, vorzugsweise 85 - 93 mol-% Zirkon,
(d) aus 2-30 mol-%, vorzugsweise 3-15 mol-% Yttrium, 2-30 mol-%, vorzugsweise 3 - 15 mol-% Cer und 40 - 96 mol-%, vorzugsweise 70 - 94 mol-% Zirkon,
(e) aus 2-30 mol-%, vorzugsweise 3-15 mol-% Yttrium, 2-30 mol-%, vorzugsweise 3 - 15 mol-% Scandium und 40 - 96 mol-%, vorzugsweise 70 - 94 mol-% Zirkon.

Bevorzugt handelt es sich bei der dispersionsverfestigten Edelmetalllegierung um reines Edelmetall oder eine Edelmetalllegierung, in die, bis auf Verunreinigungen, nur die zumindest teilweise oxidierten Nicht-Edelmetalle eingemischt sind. Mit anderen Worten besteht die dispersionsverfestigte Edelmetalllegierung bevorzugt aus dem mindestens einen Edelmetall, dem zumindest teilweise oxidierten mindestens einen Nicht-Edelmetall und Verunreinigungen, die dispersionsverfestigte Edelmetalllegierung besteht also bevorzugt aus dem mindestens einen Edelmetall, dem mindestens einen Nicht-Edelmetall, Sauerstoff und Verunreinigungen.

Unter den Verunreinigungen dispersionsverfestigten Edelmetalllegierung und der Nicht-Edelmetalle beziehungsweise deren Oxiden sind übliche Verunreinigungen zu verstehen, die beabsichtigt in die dispersionsverfestigte Edelmetalllegierung gelangt sind oder die unvermeidbar im Zuge des Darstellungsprozesses in die Ausgangsmaterialien gelangt sind beziehungsweise nicht mit vertretbarem Aufwand (vollständig) aus den Rohstoffen entfernt werden konnten. Der Anteil der Verunreinigungen beträgt bevorzugt in der Summe maximal 1 Gew.-% der beschriebenen dispersionsverfestigten Edelmetalllegierung, bevorzugt maximal 0,5 Gew.-%.

Insbesondere bevorzugt handelt es sich bei der dispersionsverfestigten Edelmetalllegierung um eine dispersionsverfestigte Platinlegierung, also um reines Platin oder eine Platinlegierung, in die, bis auf Verunreinigungen, nur die zumindest teilweise oxidierten Nicht-Edelmetalle eingemischt sind. Mit anderen Worten besteht die dispersionsverfestigte Platinlegierung bevorzugt aus Platin und optional mindestens einem weiteren Edelmetall, dem zumindest teilweise oxidierten mindestens einen Nicht-Edelmetall und Verunreinigungen, die dispersionsverfestigte Platinlegierung besteht also bevorzugt aus Platin und optional mindestens einem weiteren Edelmetall, dem Nicht-Edelmetall, Sauerstoff und Verunreinigungen. Der Anteil der Verunreinigungen beträgt bevorzugt in der Summe maximal 1 Gew.-% der beschriebenen dispersionsverfestigten Platinlegierung, bevorzugt maximal 0,5 Gew.-%. In besonders bevorzugten Ausführungsformen besteht die dispersionsverfestigte Platinlegierung aus Platin, Rhodium, dem zumindest teilweise oxidierten mindestens einen Nicht-Edelmetall und Verunreinigungen.

Beispiele für bevorzugte dispersionsverfestigte Platinlegierungen sind PtRh(1-20)NEM(0,005-1)-Legierung oder PtPd(10-20)Rh(1-5)NEM(0,005-1)-Legierungen, ganz besonders bevorzugt PtRh3NEM(0,005-1), PtRh4NEM(0,005-1), PtRh5NEM(0,005-1), PtRh8NEM(0,005-1), PtRh10NEM(0,005-1), PtRh15NEM(0,005-1), PtPd5Rh5NEM(0,005-1), PtPd5Rh3NEM(0,005-1), PtPd5Rh4NEM(0,005-1), PtPd15Rh3NEM(0,005-1) oder PtPd15Rh4NEM(0,005-1). PtRh(X)NEM(0,005-1) bedeutet hierbei, dass die Legierung neben Verunreinigungen aus X Gewichts-% Rhodium, 0,005 bis 1 Gewichts-% Nicht-Edelmetall (NEM), dem Sauerstoff des zumindest teilweise oxidierten Nicht-Edelmetalls und Platin besteht; PtPd(Y)Rh(X)NEM(0,005-1), dass die Legierung neben Verunreinigungen aus Y Gewichts-% Palladium, X Gewichts-% Rhodium, 0,005 bis 1 Gewichts-% Nicht-Edelmetall (NEM), dem Sauerstoff des zumindest teilweise oxidierten Nicht-Edelmetalls und Platin besteht.

Das Oxid des mindestens einen Nicht-Edelmetalls kann dem Edelmetall oder der Edelmetalllegierung während der Herstellung der dispersionsverfestigten Edelmetalllegierung zugesetzt werden. Alternativ kann das Oxid des mindestens einen Nicht-Edelmetalls in situ durch teilweise Oxidation des mindestens einen Nicht-Edelmetalls während der Herstellung der dispersionsverfestigten Edelmetalllegierung gebildet werden.

Die dispersionsverfestigte Edelmetalllegierung kann pulvermetallurgisch oder schmelzmetallurgisch hergestellt werden.

Zur pulvermetallurgischen Herstellung der dispersionsverfestigten Edelmetalllegierung kann beispielsweise Pulver einer Edelmetall-Zusammensetzung mit Pulver des oder der Oxide des mindestens einen Nicht-Edelmetalls mechanisch vermischt werden. Die pulvermetallurgische Herstellung kann auch durch Simultanfällung aus Salzlösungen, durch Eindampfen von Lösungen, die mindestens Vorläufer der vorgesehenen Komponenten enthalten oder durch Versprühen solcher Lösungen in Flammen erfolgen. Weitere Herstellungsschritte können das Glühen des Pulvers, das Pressen zu einem Formkörper und Sintern umfassen.

Bevorzugt kann vorgesehen sein, dass zunächst schmelzmetallurgisch eine Edelmetalllegierung hergestellt wird, die mindestens ein Edelmetall und das mindestens eine Nicht-Edelmetall umfasst. Anschließend kann ein Oxidationsschritt erfolgen, bei dem durch eine Temperaturbehandlung in einem oxidierenden Medium das in der Edelmetalllegierung enthaltenen mindestens eine Nicht-Edelmetall zumindest teilweise oxidiert wird. Die so hergestellte dispersionsverfestigte Edelmetalllegierung kann anschließend zu einem Edelmetalldraht geformt werden und besonders bevorzugt davor und/oder danach geglüht werden.

Das erfindungsgemäße Katalysatornetz umfasst mindestens einen Edelmetalldraht. Das Katalysatornetz kann dabei vollständig aus Edelmetalldraht bestehen, es kann aber auch weitere Bestandteile umfassen, beispielsweise Drähte oder Garn aus Nicht-Edelmetallen oder nicht-metallischen Materialien. Beispiele für nicht-metallische Materialien sind organische und keramische Materialien.

Vorzugsweise wird ein Edelmetalldraht eingesetzt, der einen Durchmesser von 40 - 150 $\mu$m aufweist, bevorzugt 50 - 130 $\mu$m.

Der mindestens eine Edelmetalldraht kann als Runddraht, das heißt mit einem runden Querschnitt, ausgebildet sein. In einer anderen Ausführung kann der mindestens eine Edelmetalldraht als abgeflachter Runddraht oder als Draht mit einem anderen Querschnitt ausgeführt werden.

Der mindestens eine Edelmetalldraht kann eine zwei- oder dreidimensionale Struktur aufweisen. Der mindestens eine Edelmetalldraht kann beispielsweise einen oder mehrere wellenförmige, treppenförmige oder helixförmig ausgebildete Längenabschnitte umfassen oder als über die gesamte Länge als wellenförmiger, treppenförmiger oder helixförmig gebogener Draht ausgebildet sein. Falls der mindestens eine Edelmetalldraht einen helixförmig ausgebildeten Längenabschnitt aufweist, ist über die Anzahl der Windungen der helixförmigen Längenabschnittes sowohl die aktive Katalysatoroberfläche eines Katalysatornetzes als auch die Masse des Katalysatornetzes bezogen auf eine Oberflächeneinheit einstellbar. Bei Verwendung eines Edelmetalldrahts mit zwei- oder dreidimensionaler Struktur weist ein daraus hergestelltes Katalysatornetz eine dreidimensionale Struktur auf, für deren Langzeitstabilität sich die Verwendung von dispersionsgehärteten Edelmetalllegierungen als besonders vorteilhaft erwiesen hat.

Der mindestens eine Edelmetalldraht kann mehrere Drähte, die in diesem Fall auch als Filamente bezeichnet werden, umfassen. In solchen Fällen kann bereits der mindestens eine Edelmetalldraht eine erhöhte Festigkeit aufweisen, was die Langzeitstabilität des Katalysatornetzes verbessert. Die Filamente können alle aus dem gleichen Material bestehen, d.h. alle edelmetallhaltig sein, oder aus unterschiedlichen Materialien bestehen, die wiederum nicht alle edelmetallhaltig sein müssen.

Die Filamente können miteinander verdrillt sein, in diesen Fällen weist der mindestens eine Edelmetalldraht eine seilartige Struktur auf. Vorteilhaft kann auch sein, wenn der mindestens eine Edelmetalldraht mindestens ein Filament umfasst, das helixförmig um mindestens ein weiteres Filament gewickelt ist.

Der mindestens eine Edelmetalldraht kann mindestens ein Filament aus einer dispersionsverfestigten Edelmetalllegierung und mindestens ein weiteres Filament aus einer Edelmetalllegierung umfassen, die nicht dispersionsverfestigt ist. Insbesondere kann der mindestens eine Edelmetalldraht mindestens ein Filament aus einer dispersionsverfestigten Platinlegierung umfassen und mindestens ein weiteres Filament aus einer Platinlegierung umfassen, die nicht dispersionsverfestigt ist. Als besonders vorteilhaft für die Langzeitstabilität und gleichzeitiger hoher katalytischer Effizienz von Katalysatornetzen mit solchen Edelmetalldrähten haben sich solche herausgestellt, die mindestens ein lineares Filament und mindestens ein darum angeordnetes helixförmiges Filament aufweisen.

In vielen Fällen kann es vorteilhaft sein, dass das Katalysatornetz mindestens einen weiteren Edelmetalldraht umfasst, es also aus zwei oder mehr Edelmetalldrähten gebildet wird. In diesen Fällen können die mindestens zwei Edelmetalldrähte aus dem gleichen Material oder aus unterschiedlichen Materialien bestehen. Die mindestens zwei Edelmetalldrähte können den gleichen oder unterschiedliche Durchmesser und/oder die gleiche oder unterschiedliche Struktur aufweisen. Es hat sich als vorteilhaft erwiesen, wenn der mindestens eine weitere Edelmetalldraht eine Platinlegierung umfasst, insbesondere eine nicht-dispersionsverfestigte Platinlegierung.

Das erfindungsgemäße Katalysatornetz ist zur Herstellung von Salpetersäure nach dem Ostwald-Verfahren geeignet. Dabei wird das Katalysatornetz zur katalytischen Ammoniakverbrennung von einem Ammoniak-Sauerstoff-Gemisch durchströmt.

Das erfindungsgemäße Katalysatornetz ist außerdem zur Herstellung von Blausäure nach dem Andrussow-Verfahren geeignet. Dabei wird das Katalysatornetz von einem Ammoniak-Methan-Sauerstoff-Gemisch durchströmt.

Die vorliegende Erfindung betrifft außerdem ein Katalysatorsystem zur katalytischen Oxidation von Ammoniak, umfassend mindestens ein erfindungsgemäßes Katalysatornetz. Für bevorzugte Ausführungsformen des Katalysatornetzes sei auf die vorangegangenen Ausführungen verwiesen.

Bevorzugt umfasst das Katalysatorsystem einen Katalysatornetzstapel, mit anderen Worten umfasst das Katalysatorsystem mindestens zwei Katalysatornetze. Die mindestens zwei Katalysatornetze können gleich oder unterschiedlich sein. Je nach vorgesehener Verwendung des Katalysatorsystems und den Reaktionsbedingungen im Strömungsreaktor können Katalysatornetze unterschiedlicher oder gleicher Struktur und unterschiedlicher oder gleicher Edelmetalldrähte miteinander kombiniert werden.

Das Katalysatorsystem kann eine oder mehrere Katalysatornetz-Gruppen umfassen. Unter einer Katalysatornetz-Gruppe wird ein Ensemble von Katalysatornetzen verstanden, die aus mindestens einem Edelmetalldraht der gleichen Zusammensetzung gebildet werden. Typischerweise umfasst eine Katalysatornetzgruppe mehr als ein Katalysatornetz.

Das Katalysatorsystem kann auch weitere Komponenten umfassen.

In bevorzugten Ausführungsformen kann das Katalysatorsystem Trennelemente umfassen, beispielsweise in Form von Zwischennetzen. Solche Trennelemente können eingesetzt werden, um einer Kompression und/oder Verschmelzung oder Versinterung benachbarter Katalysatornetze oder Katalysatornetz-Gruppen unter Druckbelastung entgegenzuwirken. Das oder die Trennelement(e) verfügen vorzugsweise über eine im Vergleich zu den Katalysatornetzen eingeschränkte Flexibilität.

Als Trennelemente eignen sich beispielsweise Elemente oder Netze aus einem hitzebeständigen Stahl, typischerweise einer FeCrAI-Legierung wie Megapyr oder Kanthal, Edelstahl oder aus hitzebeständigen Legierungen wie beispielsweise Nickel-Chrom-Legierungen. Das oder die Trennelement(e) können außerdem eine katalytisch aktive Beschichtung umfassend mindestens ein Edelmetall aufweisen.

Die vorliegende Erfindung betrifft außerdem ein Verfahren zur katalytischen Oxidation von Ammoniak, bei dem ein Ammoniak enthaltendes Frischgas über ein erfindungsgemäßes Katalysatornetz geleitet wird. Für bevorzugte Ausführungsformen des Katalysatornetzes sei auf die vorangegangenen Ausführungen verwiesen.

Nachfolgend wird die Erfindung anhand von Zeichnungen, einem Kompressionsversuch und einem Versuch zur katalytischen Effizienz erläutert.

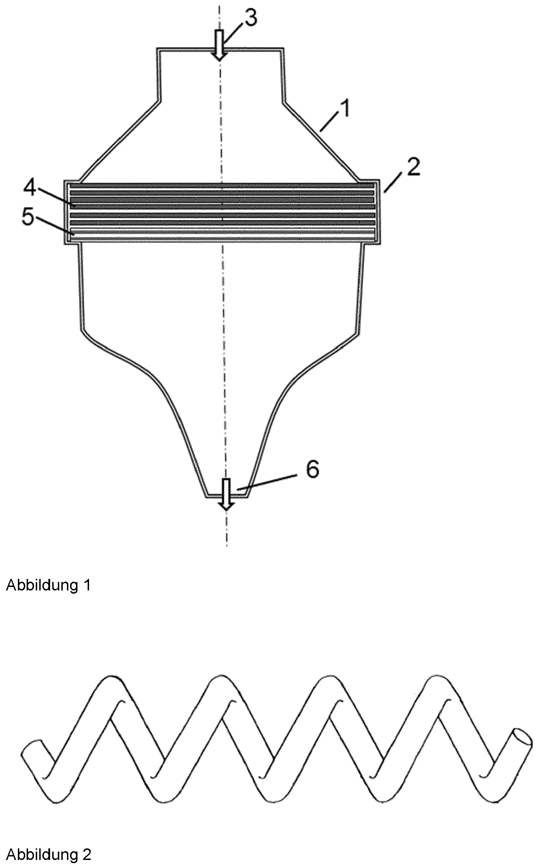

**Abbildung 1** zeigt schematisch einen senkrecht positionierten Strömungsreaktor 1 zur heterogen-katalytischen Oxidation von Ammoniak. Das Katalysatorsystem 2 bildet die eigentliche Reaktionszone des Strömungsreaktors 1. Das Katalysatorsystem 2 umfasst mehrere, in Strömungsrichtung 3 des Frischgases hintereinander angeordnete Katalysatornetze 4, hinter denen mehrere Catchment-Netze 5 angeordnet sein können. Der effektive Katalysatornetz-Durchmesser kann bis zu 6 m betragen. Die eingesetzten Netze sind jeweils textile Flächengebilde, die durch maschinelles Weben, Wirken oder Stricken von Edelmetalldrähten hergestellt werden.

Ein entsprechender Strömungsreaktor wird beispielsweise für die Synthese der Cyanwasserstoffsäure nach dem Andrussow-Verfahren verwendet. Als Frischgas wird in Strömungsrichtung 3 ein Ammoniak-Methan-Luftgemisch unter erhöhtem Druck eingeleitet. Beim Eintritt in das Katalysatorsystem 2 erfolgen eine Zündung des Gasgemischs und eine anschließende exotherme Verbrennungsreaktion. Die Gesamtreaktion lautet:

$$NH_3 + CH_4 + 1{,}5\ O_2 \rightarrow HCN + 3\ H_2O$$

Diese exotherme Reaktion erhöht die Temperatur der Gase auf bis zu 1100 °C.

Kompressionsversuch

Katalysatornetze wurden aus Drähten mit einem Durchmesser von 76 $\mu$m gewebt. Dabei wurden ein linearer Kettdraht und ein helixförmiger Schussdraht mit 17,5 Windungen/cm verwendet. Abbildung 2 zeigt die Struktur des helixförmigen Drahtes. Beide Drähte enthielten eine PtRh10-Legierung, eine industriell standardmäßig verwendete Legierung. Im Fall der erfindungsgemäßen Katalysatornetze war der helixförmige Draht dispersionsverfestigt.

Stapel aus jeweils 24 Katalysatornetzen (L x B: 50 mm x 50 mm) wurden über einen Zeitraum von 3 Tagen bei einer Umgebungstemperatur von 1200 °C mit einem Gewicht von 1 kg beaufschlagt. Die Dicke der Netzstapel wurde vor und nach der Hitzebehandlung an jeweils 16 Punkten gemessen. Beide Netzpakete wiesen zu Anfang des Versuchs eine Dicke von ca. 8 mm auf. Die Kompression wurde gemäß der Formel

$$Kompression = \frac{\Delta\ Dicke}{Anfangsdicke}$$

bestimmt.

Tabelle 1 stellt die Ergebnisse des Kompressionsversuchs vergleichend gegenüber. Das Netzpaket unter Verwendung der erfindungsgemäßen Katalysatornetze (EB) zeigte eine deutlich niedrigere Kompression als das Netzpaket in dem die Netze vollständig aus nicht dispersions-verfestigtem Standard-Draht (VB) gefertigt waren.

Tabelle 1:

|  | Kompression [%] |
|---|---|
| VB | 40,5 % |
| EB | 22,5 % |

Die Kompressionsstabilität des getesteten Katalysatornetzpaketes wurde durch die Verwendung eines dispersionsverfestigten Platindrahtes verbessert. Verbunden damit wird ein positiver Effekt auf die Langzeiteffizienz eines entsprechenden Katalysatorsystems erwartet.

Effizienz im Strömungsreaktor

In einem Strömungsreaktor gemäß Abbildung 1 wurde die Effizienz von Katalysatorsystemen aus jeweils 10 Katalysatornetzen mit analoger Zusammensetzung wie im Vergleichsbeispiel und im erfindungsgemäßen Beispiel bei der Oxidation von Ammoniak verglichen.

Dabei wurde Frischgas von oben in den Reaktor 1 unter einem erhöhten Druck eingeleitet. Das Frischgas war ein Ammoniak-Luftgemisch mit einem nominalen Ammoniakgehalt von 10,7 Vol.% und einer Vorheiztemperatur von 175°C. Beim Eintritt in das Katalysatorsystem 2 erfolgen eine Zündung des Gasgemischs und eine anschließende exotherme Verbrennungsreaktion. Dabei findet folgende Hauptreaktion statt:

$$4\ NH_3 + 5\ O_2 \rightarrow 4\ NO + 6\ H_2O$$

Dabei wird Ammoniak ($NH_3$) zu Stickstoffmonoxid (NO) und Wasser ($H_2O$) umgesetzt. Das gebildete Stickstoffmonoxid (NO) reagiert im abströmenden Reaktionsgasgemisch (symbolisiert durch den die Strömungsrichtung des abströmenden Reaktionsgasgemischs anzeigenden Richtungspfeil 7) mit überschüssigem Sauerstoff zu Stickstoffdioxid ($NO_2$), das mit Wasser in einer nachgeschalteten Absorptionsanlage zu Salpetersäure ($HNO_3$) umgesetzt wird.

Die Messung der katalytischen Effizienz (das heißt, der Produktausbeute an NO) hat folgenden Ablauf:

1. Vorab wird sichergestellt, dass das Katalysatorsystem für den vollständigen Umsatz des eingesetzten Ammoniaks geeignet ist. Das bedeutet, dass $NH_3$ im Produktgas nicht mehr in nennenswerter Menge vorhanden ist, was mittels massenspektrometrischer Untersuchung des Produktgases überprüft wird.

2. Gleichzeitige Entnahme eine Probe von $NH_3$/Luft stromaufwärts zur Katalysatorpackung und einer Probe aus dem Produktgas stromabwärts in jeweils eigenständige evakuierte Kolben. Die Masse des Gases wird durch Wiegen bestimmt.

3. Das $NH_3$ Luft/Gemisch wird in destilliertem Wasser absorbiert und mittels 0.1 N Schwefelsäure und Methylrot nach Farbumschlag titriert.

4. Die nitrosen Produktgase werden in 3 %iger Natriumperoxid Lösung absorbiert und mittels 0.1 N Natriumhydroxid Lösung und Methylrot nach Farbumschlag titriert.

5. Die katalytische Effizienz Eta ergibt sich aus: Eta = 100 x $C_n$ / $C_a$, wobei $C_a$ die mittlere $NH_3$ Konzentration aus 7 Einzelmessungen im Frischgas in Gewichtsprozent und $C_n$ die mittlere $NO_x$ Konzentration aus 7 Einzelmessungen ist, ausgedrückt als Gewichtsprozent des $NH_3$ welches zu $NO_x$ oxidiert worden ist.

6. Separat wird der Volumenanteil an $N_2O$ im Produktgas mittels Gas-Chromatographie bestimmt.

Tabelle 2 stellt die Katalysatoreffizienz der Katalysatorsysteme (Ausbeute an NO in %) für unterschiedliche Frischgas-Durchsätze gegenüber. Die Abkürzung "tN/m²d" steht dabei für "Tonnen Stickstoff (aus Ammoniak) pro Tag und normierter effektiver Querschnittsfläche des Katalysatorsystems von einem Quadratmeter".

**Tabelle 2:**

| Frischgas-Durchsatz | | Effizienz [%] |
|---|---|---|
| 22,5 tN/m²d 5 bar | VB | 94,9 |
| | EB | 95,2 |
| 30 tN/m²d 9 bar | VB | 92,2 |
| | EB | 92,3 |
| 55 tN/m²d 9 bar | VB | 89,7 |
| | EB | 90,4 |

Beide Testsysteme zeigten bei allen getesteten Frischgas-Durchsätzen eine vergleichbare katalytische Effizienz. Die Ergebnisse verdeutlichen, dass der Einsatz der dispersionsverfestigten Platinlegierung die katalytische Aktivität des Katalysatornetzes nicht beeinträchtigt.

**Patentansprüche**

1.   Katalysatornetz umfassend mindestens einen Edelmetalldraht,

dadurch gekennzeichnet, dass der mindestens eine Edelmetalldraht mindestens eine dispersionsverfestigte Edelmetalllegierung enthält, die neben mindestens einem Edelmetall mindestens ein Nicht-Edelmetall umfasst, wobei das mindestens eine Nicht-Edelmetall ausgewählt ist aus der Gruppe bestehend aus Zirkonium, Cer, Scandium und Yttrium und das mindestens eine Nicht-Edelmetall zumindest teilweise als Oxid vorliegt.

2.   Katalysatornetz gemäß Anspruch 1, wobei das Katalysatornetz eine dreidimensionale Struktur aufweist.

3.   Katalysatornetz gemäß Anspruch 1 oder 2, wobei der Anteil des mindestens einen Edelmetalls mindestens 50 Gew.-% bezogen auf das Gesamtgewicht der dispersionsverfestigten Edelmetalllegierung beträgt.

4.   Katalysatornetz gemäß einem der vorangegangenen Ansprüche, wobei die dispersionsverfestigte Edelmetalllegierung aus dem mindestens einen Edelmetall, dem zumindest teilweise oxidierten Nicht-Edelmetall und Verunreinigungen besteht.

5.   Katalysatornetz gemäß einem der vorangegangenen Ansprüche, wobei das mindestens eine Edelmetall ausgewählt ist aus der Gruppe bestehend aus Platin, Palladium, Rhodium und deren Mischungen.

6.   Katalysatornetz gemäß einem der vorangegangenen Ansprüche, wobei die dispersionsverfestigte Edelmetalllegierung eine Platinlegierung ist.

7.   Katalysatornetz gemäß einem der vorangegangenen Ansprüche, wobei die dispersionsverfestigte Edelmetalllegierung 0,005 Gew.-% bis 1,0 Gew.-% des mindestens einen Nicht-Edelmetalls enthält.

8. Katalysatornetz gemäß einem der vorangegangenen Ansprüche, wobei das mindestens eine Nicht-Edelmetall zumindest zu 70 % oxidiert vorliegt.

9. Katalysatornetz gemäß einem der vorangegangenen Ansprüche, wobei der mindestens eine Edelmetalldraht mehrere Filamente umfasst.

10. Katalysatornetz gemäß einem der vorangegangenen Ansprüche, wobei der mindestens eine Edelmetalldraht eine zwei- oder dreidimensionale Struktur aufweist.

11. Katalysatornetz gemäß Anspruch 10, wobei der mindestens eine Edelmetalldraht einen helixförmig ausgebildeten Längenabschnitt aufweist.

12. Katalysatornetz gemäß einem der vorangegangenen Ansprüche, wobei das Katalysatornetz mindestens einen weiteren Edelmetalldraht umfasst.

13. Katalysatornetz gemäß Anspruch 12, wobei der mindestens eine weitere Edelmetalldraht eine Platinlegierung umfasst.

14. Katalysatorsystem zur katalytischen Oxidation von Ammoniak, umfassend mindestens ein Katalysatornetz gemäß einem der vorangegangenen Ansprüche.

15. Verfahren zur katalytischen Oxidation von Ammoniak, bei dem ein Ammoniak enthaltendes Frischgas über mindestens ein Katalysatornetz gemäß einem der Ansprüche 1 bis 13 geleitet wird.

Abbildung 1

Abbildung 2

**Europäisches Patentamt**
**European Patent Office**
**Office européen des brevets**

# EUROPÄISCHER RECHERCHENBERICHT

Nummer der Anmeldung

EP 22 17 5272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 274 071 A (PGP IND INC [US]) 13. Juli 1994 (1994-07-13) * Zusammenfassung * * Seite 5, Zeilen 15-25 * * Seite 6, Zeilen 2-11 * * Seite 7, Zeilen 15-17 * ----- | 1-15 | INV. B01J23/42 B01J23/44 B01J23/46 B01J23/63 B01J35/06 C01B21/00 |
| X | WO 2018/065271 A1 (UMICORE AG & CO KG [DE]) 12. April 2018 (2018-04-12) * Zusammenfassung * * Ansprüche 1,7,10,11; Abbildungen 3a,3b,3i,3ii * ----- | 1-15 | |

**RECHERCHIERTE SACHGEBIETE (IPC)**

B01J
C01B

Der vorliegende Recherchenbericht wurde für alle Patentansprüche erstellt

| Recherchenort | Abschlußdatum der Recherche | Prüfer |
|---|---|---|
| München | 15. November 2022 | Fischbach, Malaika |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

EP 4 282 526 A1

**ANHANG ZUM EUROPÄISCHEN RECHERCHENBERICHT**
**ÜBER DIE EUROPÄISCHE PATENTANMELDUNG NR.**

EP 22 17 5272

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2022

| Im Recherchenbericht angeführtes Patentdokument | Datum der Veröffentlichung | Mitglied(er) der Patentfamilie | Datum der Veröffentlichung |
|---|---|---|---|
| GB 2274071 A | 13-07-1994 | AU 5820194 A | 15-08-1994 |
|  |  | GB 2274071 A | 13-07-1994 |
|  |  | WO 9415711 A1 | 21-07-1994 |
| WO 2018065271 A1 | 12-04-2018 | EP 3523024 A1 | 14-08-2019 |
|  |  | ES 2829555 T3 | 01-06-2021 |
|  |  | RU 2019113120 A | 06-11-2020 |
|  |  | US 2019184386 A1 | 20-06-2019 |
|  |  | WO 2018065271 A1 | 12-04-2018 |

Für nähere Einzelheiten zu diesem Anhang : siehe Amtsblatt des Europäischen Patentamts, Nr.12/82

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0652985 A1
- EP 3523024 A1
- EP 3256244 A1
- GB 1340076 A
- EP 0683240 A2
- EP 1188844 A1
- EP 1964938 A1
- EP 3077556 A1

**In der Beschreibung aufgeführte Nicht-Patentliteratur**

- **E. DROST ; H. GÖLITZER ; M. PONIATOWSKI ; S. ZEUNER.** Platin-Werkstoffe für Hochtemperatur-Einsatz. *Metall,* 1996, vol. 50, 492-498